# EUROPEAN PATENT SPECIFICATION

(11) **EP 0 853 033 B1**
(45) Date of publication and mention of the grant of the patent: **23.05.2001**
(21) Application number: 98300153.8
(22) Date of filing: 09.01.1998
(51) Int. Cl.: B62D 63/08, B60D 1/64, B60D 1/62

(54) **Trailers**
Anhänger
Remorque

(30) Priority: 09.01.1997 GB 9700329
(43) Date of publication of application: 15.07.1998
(73) Proprietor: Montracon (Refrigerated Vehicles) Ltd., York, YO4 3EW (GB)
(72) Inventor: Reynolds, Steven John, North Newbald, York, Y04 3SW (GB); Peace, Gavin, Goole, East Yorkshire, DN14 7QP (GB)
(74) Representative: Wise, Stephen James

(56) References cited:
- EP-A- 0 539 675
- US-A- 3 650 545

## Description

The present invention relates to trailers for motor vehicles and to tractor/trailer combinations.

In tractor/trailer combinations there is frequently limited access to the electrical and air couplings between the tractor and trailer. Access to couplings where the trailer is fitted with a front mounted refrigeration unit is even more restricted. The couplings are connected by means of coiled cables and hoses to the tractor. These cables and/or hoses will be referred to hereafter as "tractor connectors". A further problem exists when the trailer turns relative to the tractor in that the connectors can be hooked under a corner of the trailer and are then damaged by the tractor.

According to the invention a trailer is provided with a forwardly mounted track extending athwart the trailer, a coupling mounting mounted to and movable on the track, conductors and/or conduits mounted between the mounting and trailer such as to allow said movability, said mounting providing coupling with a tractor.

It follows that the invention further comprises a tractor/trailer combination where the trailer is provided as in the preceding paragraph.

The provision of the track enables the mounting to move from side to side of the trailer as the tractor turns, the mounting being coupled to the standard tractor flexible tractor connectors. Since the tractor connectors tend to centralise the mounting, the conductors and/or conduits between the mounting and trailer also tend to centralise relative the trailer, thus preventing catching with the corners of the trailer. Furthermore the movability of the mounting relative to the trailer enables an operative when coupling or uncoupling and while standing on the ground to pull the mounting to his side so that he can use both hands to make or unmake connections of the conductors and/or conduits.

Preferably the track is curved so that it projects forwardly of the extremities at its centre portion so as to maintain as far as possible a constant radial dimension between the trailer and mounting. The mounting may be mounted to the track by means of rollers. The connections between the mounting and trailer, that is the conductors and/or conduits, are preferably flexible to allow for simple connections and any radial differences along the track between trailer and mounting.

In order to counteract any tendency for the mounting to twist on the track, the track may have a guide on or adjacent the track or alternatively the track may have a pair of spaced apart track members.

An embodiment of the invention will now be described by way of example and with reference to the accompanying drawings in which:-
Figure 1 is a perspective view of the front of a trailer incorporating the invention according to a first embodiment,
Figures 2 and 3 are plan views showing the use of the invention,
Figure 4 is a plan view of the track of the invention with mounting fitted according to a first embodiment,
Figure 5 is an elevation of the arrangement of Figure 4,
Figure 6 is an enlarged cross section taken on VI-VI of Figure 5,
Figure 7 is an elevation of the mounting of Figures 4 to 6 but without couplings,
Figure 8 is a plan view of the mounting of Figure 7,
Figure 9 is a plan view of a second embodiment of the elevation,
Figure 10 is an elevation of the second embodiment shown in Figure 9, and
Figure 11 is a cross-section.

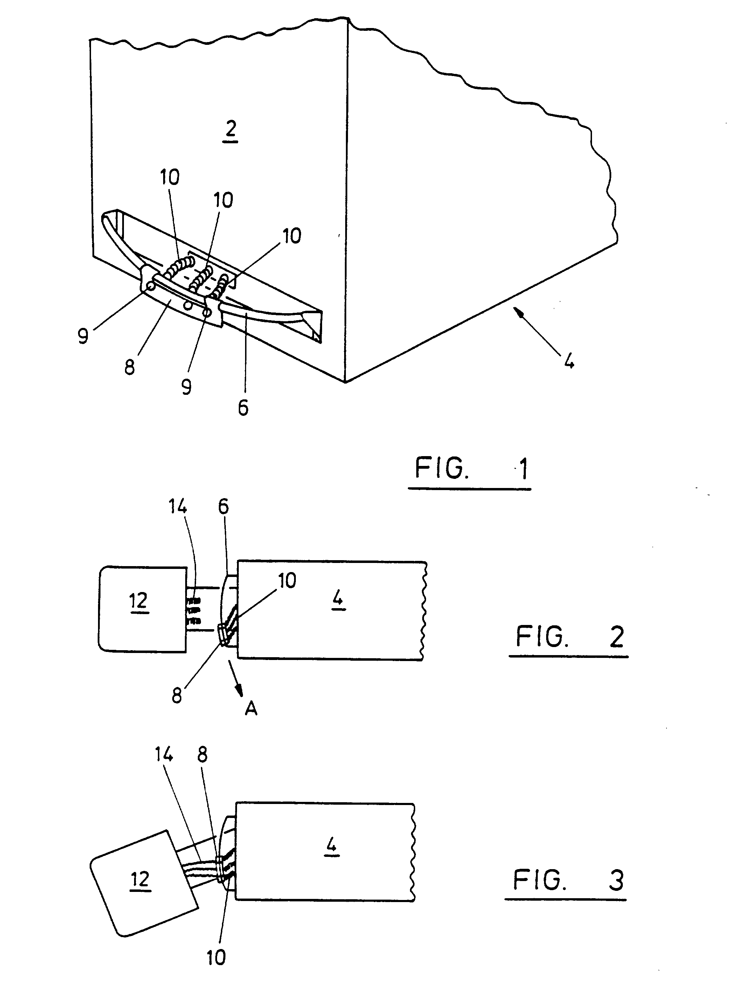

In Figure 1 there is shown diagrammatically the front 2 of a trailer body 4. The trailer front has attached to it an arcuate track 6 of some 1.9 metres radius taken on the front edge onto which is movably mounted a mounting 8. The mounting has couplings 9 mounted to the front of the mounting. The couplings are connected by flexible coiled connectors 10 to the trailer body and may be connected to the tractor 12 (Figures 2 and 3) by the standard trailer connectors 14 (Figure 3).

Figure 2 shows the mounting 8 on track 6 pulled to one side of the tractor 12 so that the tractor connectors 14 may easily be secured to the couplings on the mounting 8. Figure 3 shows the trailer and tractor connectors as coupled together at the mounting 8 and when the tractor 12 is at an angle to the trailer as they turn the mounting keeps the connectors from snagging.

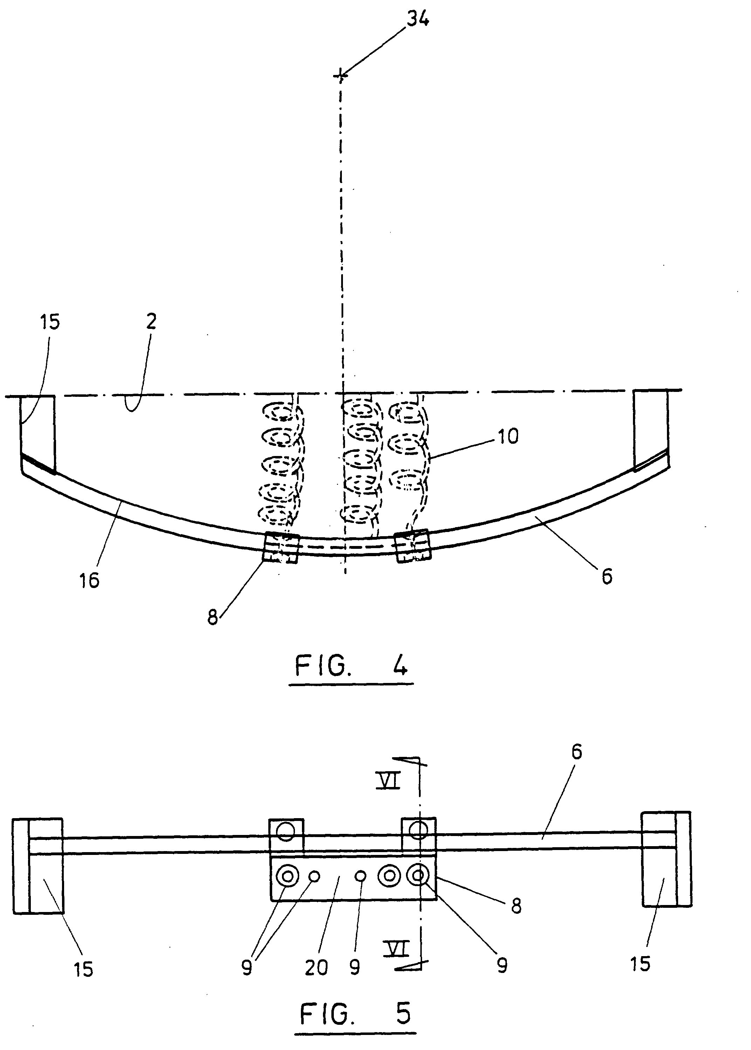

The track 6 and mounting 8 will now be described in detail with reference to Figures 4 to 8.

The track 6 is fixed to and spaced from the front 2 of the trailer by brackets 15. At the rear of the track 6 a rod 16 is welded to the track. This prevents the mounting 8 which runs on rollers 18 engaging the track top from twisting or at least partly rotating about the axis of the track. The track is curved forwardly as indicated above.

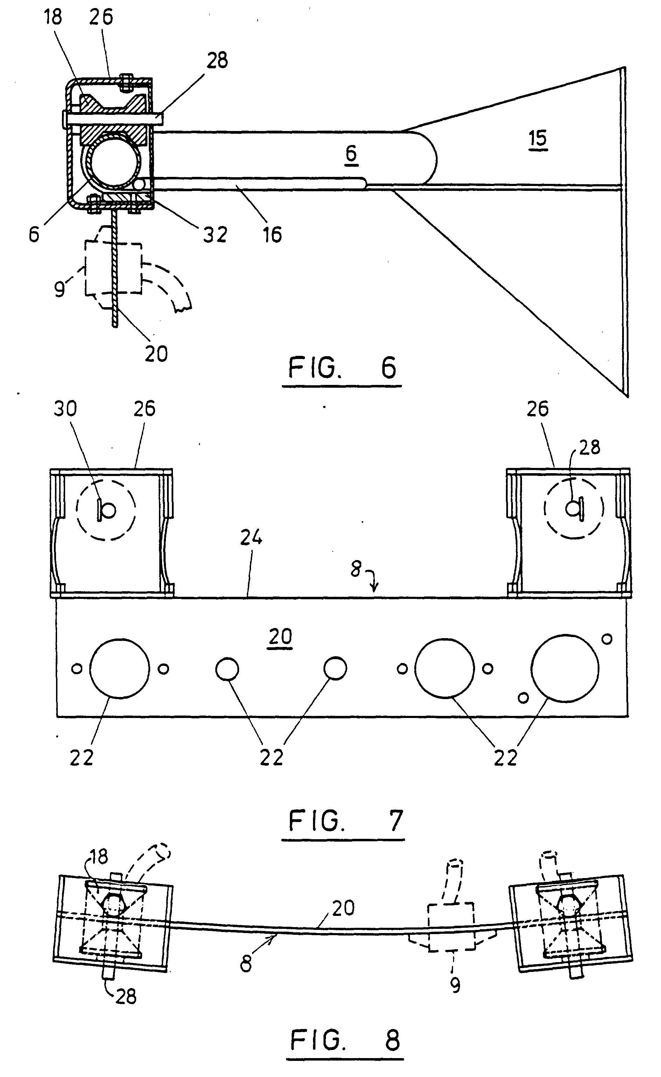

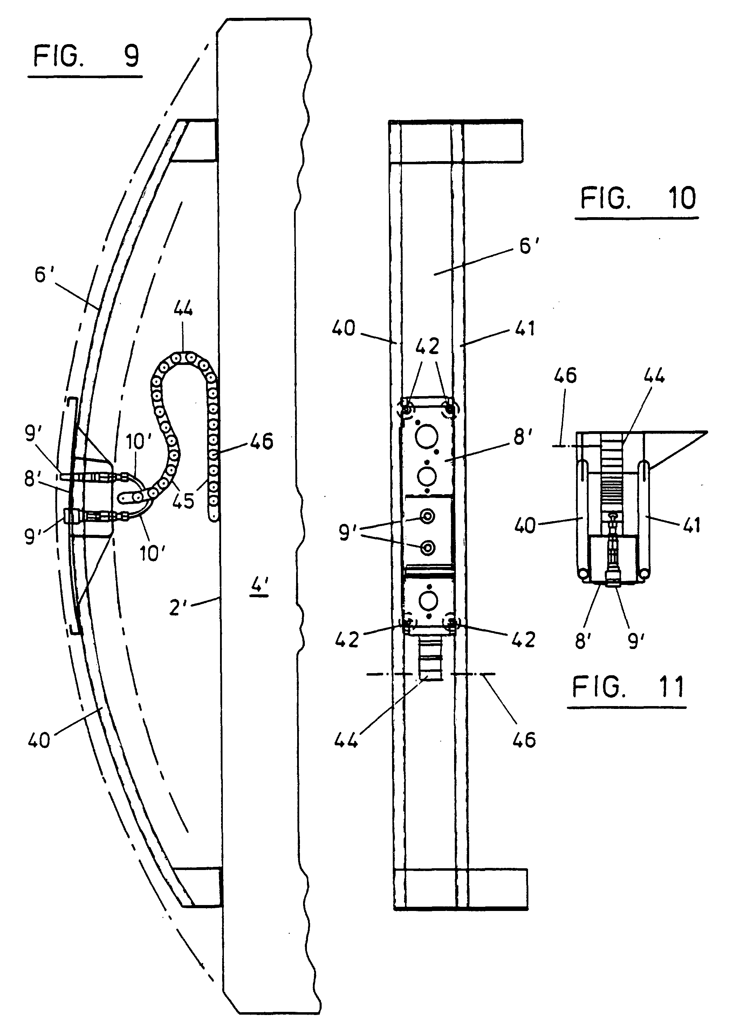

The mounting 8 comprises a plate 20 to which standard couplings 9 are secured. The couplings are only shown in broken lines in Figures 6 and 8 as indicative since several different kinds of couplings e.g. British Standard (BS, AU138: 1967) Braking Connections for Articulated Vehicles using Three-Line Air Pressure Systems, or Palm Couplings to EU Standard, may be used. Again Figure 4 shows the connectors 10 in broken lines since there may be several combinations of air hoses and multi pin electrical connectors. Holes 22 in plate 20 are of various sizes to accommodate different standard couplings.

Extending from the top edge 24 of plate 20 are hanger assemblies 26 in each of which is mounted a low friction plastics material such as polypropylene roller 18 rotational on a pin 28 which is fixed non-rotationally in the hanger by split pin and a slot on the pin engaging with plate 30. A polypropylene packing plate 32 secured to the bottom of hanger 26 acts with rod 16 in preventing rotation of the mounting and ensures metal components do not rub together. The roller pins are axially aligned with the centre of curvature 34 of the track and are some 12° to 13° apart.

In the second embodiment shown in Figures 9, 10 and 11 the track 6' comprises a pair of spaced apart track members 40 and 41 between which a mounting 8' can run on rollers 42 fixed rotatably to the mounting 8'. The pair of track members ensure that the mounting cannot twist about the horizontal. In order to ensure the flexible connectors 10' which connect the couplings 9' on the mounting 8' do not become entangled and to reduce the overpowering centring effect of short coiled connectors (otherwise known as "suzies"), the connectors 10' are carried by an articulated guide 44. The guide 44 is formed of some twenty to fifty identical support elements 45 each coupled to the next of the elements so as to pivot about a vertical axis 46. The provision of the articulated guide ensures that it is easier to hold the mounting 8' to one side of the vehicle when coupling and uncoupling the couplings.

A further improvement of the mounting is that by only now needing smaller rollers 42 as compared to the larger rollers 18 of the first embodiment, it is possible to position the tracks higher up on the front bulkhead 2' of the trailer 4' and therefore further away vertically from the tractor 12. This reduces the likelihood of damage to the couplings.

## Claims

1. A trailer (4, 4') provided with a forwardly (2) mounted track (6, 6') extending athwart the trailer, a coupling mounting (8, 8') mounted to and movable on the track, conductors and/or conduits (10, 10') mounted between the mounting and trailer such as to allow said movability, said mounting providing coupling with a tractor.

2. A trailer as claimed in claim 1 wherein the track (6, 6') projects forwards of its extremities at its centre portion.

3. A trailer as claimed in claim 1 or 2 wherein the track is tubular (6) with rollers (18) supporting said mounting, the rollers adapted to run on the track.

4. A trailer as claimed in claim 3 wherein the track has a guide (16) arranged to prevent rotation of the mounting on the track.

5. A trailer as claimed in claim 1 or 2 wherein the track comprises at least two track members (40, 41) spaced apart from each other, the mounting being guided by the track members.

6. A trailer as claimed in claim 5 wherein the mounting has at least four rollers (42) engaging with the track members.

7. A trailer as claimed in any one of claims 1 to 6 wherein the conductors and/or conduits (10, 10') between the mounting and trailer are flexible and connect to couplings (9, 9') on the mountings for further connection to a tractor.

8. A trailer as claimed in any one of claims 1 to 7 wherein the conductors and/or conduits (10, 10') are supported between the mounting and trailer body by means of an articulated guide (44) arranged to articulate about a series of substantially vertical axes (46).

9. A trailer and tractor combination (4/12) having the trailer of any one of claims 1 to 6.

10. A trailer conversion kit comprising a track and mounting as provided for a trailer as claimed in any one of claims 1 to 8.

## Patentansprüche

1. Anhänger (4, 4'), ausgestattet mit einer stirnseitig (2) vorstehend befestigten Schiene (6, 6'), die sich quer zum Anhänger erstreckt, einer Kupplungsvorrichtung (8, 8'), die auf der Schiene befestigt und auf ihr verschiebbar ist, mit Leitungen und/oder Schläuchen (10, 10'), die zwischen der Vorrichtung und dem Anhänger so befestigt sind, um die Bewegbarkeit zu gewährleisten, wobei die Vorrichtung die Kupplung mit einem Zugfahrzeug ermöglicht.

2. Anhänger nach Anspruch 1, wobei die Schiene (6, 6') über ihre Spitzen in ihrem Mittelabschnitt nach vorne hinausragt.

3. Anhänger nach Anspruch 1 oder 2, wobei die Schiene rohrförmig (6) ist und mit Laufrollen (18) ausgestattet ist, welche die Vorrichtung tragen, wobei die Laufwalzen so gestaltet sind, daß sie auf der Schiene laufen.

4. Anhänger nach Anspruch 3, wobei die Schiene eine Führung (16) ausweist, die so angeordnet ist, um die Drehung der Vorrichtung auf der Schiene zu verhindern.

5. Anhänger nach Anspruch 1 oder 2, wobei die Schiene zumindest zwei Schienenelemente (40, 41) umfaßt, die von einander beabstandet sind, wobei die Vorrichtung durch die Schienenelemente geführt wird.

6. Anhänger nach Anspruch 5, wobei die Vorrichtung zumindest vier Laufrollen (42) aufweist, die mit der Schiene in Eingriff stehen.

7. Anhänger nach jedem beliebigen der Ansprüche 1 bis 6, wobei die Leitungen und/oder Schläuche (10, 10') zwischen der Kupplungsvorrichtung und dem Anhänger biegsam sind und mit Kupplungen (9, 9') auf den Vorrichtungen zu weiteren Verbindung mit einem Zugfahrzeug verbunden sind.

8. Anhänger nach jedem beliebigen der Ansprüche 1 bis 7, wobei die Leitungen und/oder Schläuche (10, 10') zwischen der Kupplungsvorrichtung und der Anhängerkarosserie durch eine gelenkige Führung (44) getragen werden, die so angeordnet ist, um über eine Reihe von im wesentlichen vertikalen Achsen (46) gelenkig zu sein.

9. Anhänger-und-Zugfahrzeugverbindung (4/12) mit dem Anhänger nach jedem beliebigen der Ansprüche 1 bis 6.

10. Anhängerumrüstsatz, der eine Schiene und Vorrichtung wie für einen Anhänger bereitgestellt umfaßt, wie in jedem beliebigen der Ansprüche 1 bis 8 beansprucht.

## Revendications

1. Remorque (4, 4') dotée d'une glissière (6,6') montée vers l'avant (2) s'étendant en travers de la remorque, d'un assemblage de couplage (8,8') monté au, et pouvant se déplacer sur, la glissière, des conducteurs et/ou des conduits (10,10') montés entre l'assemblage et la remorque de façon à permettre ladite mobilité, ledit assemblage fournissant le couplage avec un tracteur.

2. Remorque selon la revendication 1 dans laquelle la glissière (6,6') s'avance vers l'avant de ses extrémités jusqu'au niveau de sa partie centrale.

3. Remorque selon la revendication 1 ou 2 dans laquelle la glissière est tubulaire (6) avec des rouleaux (18) supportant ledit assemblage, les rouleaux étant adaptés pour se déplacer sur la glissière.

4. Remorque selon la revendication 3 dans laquelle la glissière comporte un guide (16) disposé afin d'empêcher une rotation de l'assemblage sur la glissière.

5. Remorque selon la revendication 1 ou 2, dans laquelle la glissière comprend au moins deux éléments de glissière (40, 41) distants l'un de l'autre, l'assemblage étant guidé par les éléments de glissière.

6. Remorque selon la revendication 5 dans laquelle l'assemblage comporte au moins quatre rouleaux (42) coopérant avec les éléments de glissière.

7. Remorque selon l'une quelconque des revendications 1 à 6, dans laquelle les conducteurs et/ou les conduits (10, 10') entre l'assemblage et la remorque sont souples et se raccordent avec des éléments de couplage (9, 9') sur l'assemblage pour une connexion ultérieure à un tracteur.

8. Remorque selon l'une quelconque des revendications 1 à 7 dans laquelle les conducteurs et/ou les conduits (10, 10') sont supportés entre l'assemblage et le corps de remorque au moyen d'un guide articulé (44) agencé en vue de s'articuler autour d'une série d'axes essentiellement verticaux (46).

9. Combinaison d'une remorque et d'un tracteur (4/12) comportant la remorque suivant l'une quelconque des revendications 1 à 6.

10. Ensemble de transformation de remorque comprenant une glissière et un assemblage tels que prévus pour une remorque selon l'une quelconque des revendications 1 à 8.
